# FASCICULE DE BREVET EUROPEEN

(11) **EP 0 772 969 B1**
(45) Date de publication et mention de la délivrance du brevet: **06.06.2001**
(21) Numéro de dépôt: 96440096.4
(22) Date de dépôt: 06.11.1996
(51) Int. Cl.: A01D 78/10

(54) **Machine de fenaison comportant au moins un rotor d'andainage**
Heuwerbungsmaschine mit mindestens einem Rotor zum Schwaden
Haymaking machine with at least one windrowing rotor

(30) Priorité: 07.11.1995 FR 9513297
(43) Date de publication de la demande: 14.05.1997
(73) Titulaire: KUHN S.A., 67700 Saverne (FR)
(72) Inventeur: Aron, Jérôme, 67330 Dossenheim-sur-Zinsel (FR)
(74) Mandataire: Andres, Jean-Claude

(56) Documents cités:
- EP-A- 0 390 713
- EP-A- 0 415 301
- EP-A- 0 614 604
- EP-A- 0 642 733
- WO-A-89/08380
- DE-A- 2 833 814
- DE-A- 4 027 025
- DE-A- 4 033 526
- DE-U- 9 211 824
- FR-A- 2 707 450
- NL-A- 6 406 679

## Description

La présente invention se rapporte à une machine de fenaison comportant notamment une structure porteuse qui peut être reliée à un tracteur, au moins un rotor avec des outils d'andainage qui est articulé sur la structure porteuse de manière à pouvoir pivoter autour d'au moins un axe sensiblement horizontal et perpendiculaire au sens d'avancement, ledit rotor pouvant être entraîné en rotation autour d'un axe central qui est sensiblement vertical et qui est muni à son extrémité inférieure d'un support équipé de plusieurs roues porteuses disposées près des outils d'andainage et dont au moins une se situe, vu dans le sens d'avancement, derrière l'axe central.

Une machine de ce genre est connue dans la demande de brevet DE-2 833 814. Une telle machine effectue un travail d'andainage correct lorsque le terrain sur lequel elle évolue est bien plan. Par contre, lorsque le terrain comporte, comme c'est généralement le cas, des dénivellations à sa surface les roues porteuses soulèvent le rotor en passant par dessus celles-ci. Les outils d'andainage dudit rotor sont alors dégagés du sol et, mettent un certain temps pour revenir dans la position de travail initiale. Ils ne ratissent alors pas la totalité du fourrage qui se trouve au sol, ce qui entraîne des pertes.

La présente invention a pour but de proposer une machine n'ayant pas les inconvénients précités. Elle doit notamment permettre, avec des moyens simples, une meilleure adaptation du ou des rotors qui sont articulés par rapport à leur structure porteuse.

A cet effet, une importante caractéristique de l'invention consiste en ce que la roue porteuse qui se situe derrière l'axe central du rotor est liée à un bras du support qui comporte un moyen appuyant ladite roue porteuse contre le sol durant le travail de telle sorte qu'elle soit constamment en appui sur le sol et qu'elle ait tendance à faire pivoter le rotor vers le bas sur sa moitié avant, autour de l'articulation avec la structure porteuse. La roue porteuse qui se situe derrière l'axe central du rotor est constamment en appui sur le sol. De ce fait, elle stabilise le rotor. En sus, elle a tendance à faire pivoter la moitié avant du rotor vers le bas, autour de l'articulation avec la structure porteuse et à plaquer les autres roues porteuses au sol. Les outils d'andainage du rotor sont alors maintenus près du sol dans la zone où ils ratissent le fourrage, ce qui évite que par moments ils passent par dessus le fourrage et le laissent étalé sur le sol.

Ledit moyen d'appui de la roue porteuse est simple et peu coûteux. Le bras support de cette roue porteuse peut être réalisé en deux parties qui sont articulées entre elles à l'aide d'un axe sensiblement horizontal et sensiblement perpendiculaire au sens d'avancement. Un ressort de traction peut être accroché auxdites deux parties de telle sorte qu'il tire la seconde partie avec la roue porteuse vers le sol.

D'autres caractéristiques et avantages de l'invention ressortiront des revendications et de la description ci-après d'exemples de réalisation non limitatifs de l'invention, avec références aux dessins annexés dans lesquels :
- la figure 1 représente une vue de dessus d'une machine selon l'invention ;
- la figure 2 représente une vue de côté, avec une coupe partielle, de cette machine ;
- la figure 3 représente une vue de dessus d'un autre exemple de réalisation d'une machine selon l'invention ;
- la figure 4 représente une vue de côté d'un des rotors de la machine selon la figure 3.

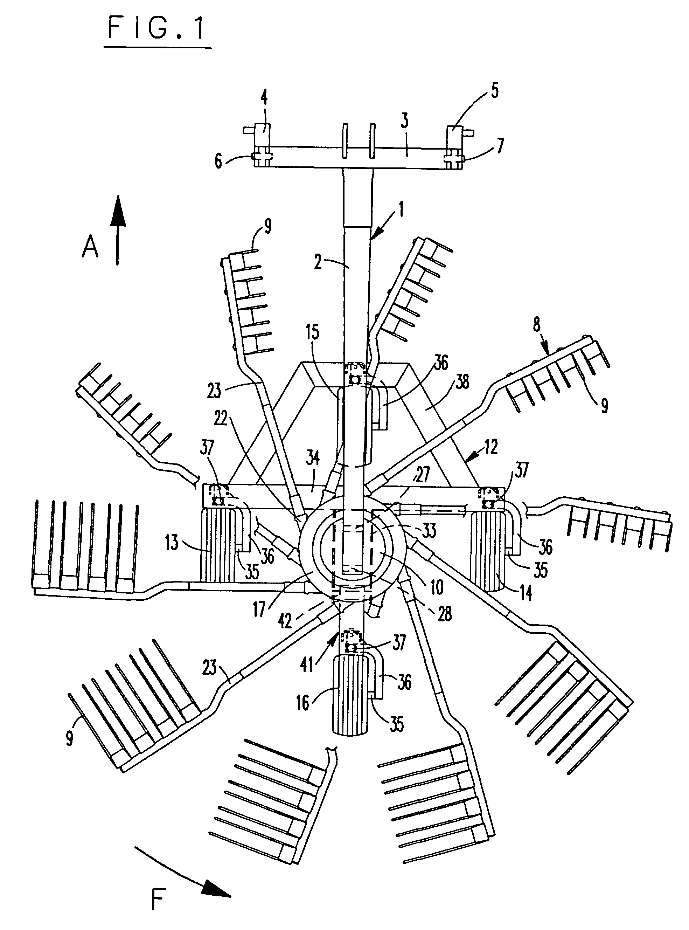

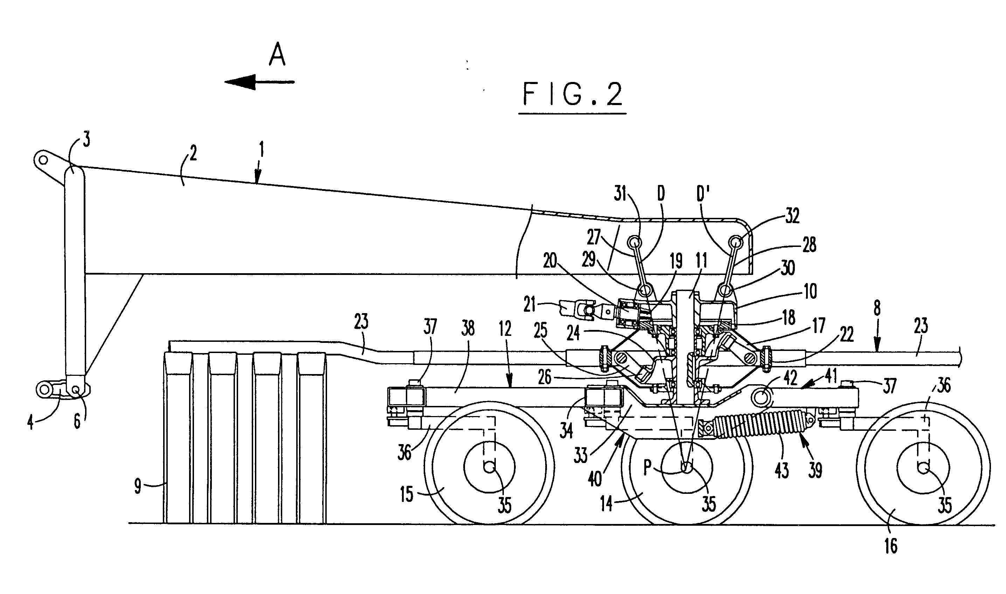

Telle qu'elle est représentée sur les figures 1 et 2, la machine selon l'invention est une andaineuse comportant une structure porteuse (1). Celle-ci est constituée par une poutre (2) qui porte à son extrémité avant un dispositif d'accouplement trois points (3) pour l'accrochage à un tracteur d'entraînement permettant de la déplacer dans une direction d'avancement (A). Les deux points d'accouplement inférieurs sont constitués par des pivots (4 et 5) qui sont articulés sur le dispositif (3) à travers des axes (6 et 7) sensiblement horizontaux et perpendiculaires à la direction d'avancement (A).

L'autre extrémité de la poutre (2) porte un rotor (8) avec des outils (9) destinés à andainer des produits tels que de l'herbe ou de la paille fauchée se trouvant sur le sol. Ce rotor (8) possède un carter (10) qui est articulé sur la poutre (2) d'une manière qui sera décrite ultérieurement. Dans ce carter (10) est logé un axe central (11) sensiblement vertical. Cet axe (11) s'étend vers le bas et porte à son extrémité inférieure un support (12) équipé de quatre roues porteuses (13 à 16) situées sous le rotor (8). Sur la partie de l'axe (11) comprise entre le carter (10) et le support (12) est disposé un boîtier (17). Il est monté sur l'axe central (11) de telle sorte qu'il puisse tourner sur celui-ci. Le côté supérieur du boîtier (17) est muni d'une couronne dentée (18) qui se situe dans le volume intérieur du carter (10). Elle engrène avec un pignon d'entraînement (19) qui se trouve également à l'intérieur du carter (10). Ce pignon (19) est solidaire d'un arbre (20) qui s'étend hors de ce carter (10) et qui peut être relié à un arbre de prise de force du tracteur à l'aide d'un arbre de transmission (21).

Le boîtier (17) est muni de paliers (22) à travers lesquels passent des bras (23). Ceux-ci s'étendent en forme de rayons et portent à leurs extrémités extérieures les outils d'andainage (9) constitués par des fourches. Ils sont logés dans lesdits paliers (22) de manière à pouvoir tourner sur eux-mêmes. Sur la partie de l'axe (11) qui se situe dans le boîtier (17) est montée une came fixe (24) destinée à commander les bras porte-outils (23) durant le travail d'andainage. Pour cela chacun de ces bras (23) possède à son extrémité qui s'étend à l'intérieur du boîtier (17) un levier (25) avec un galet (26) qui est guidé dans une gorge de la came (24).

Le rotor (8) est articulé sur la poutre (2) par l'intermédiaire de deux leviers (27 et 28) qui sont disposés l'un derrière l'autre. Chacun de ces deux leviers (27 et 28) est articulé à l'une de ses extrémités sur le carter (10) du rotor (8) au moyen d'un axe (29, 30) qui est sensiblement horizontal et sensiblement perpendiculaire à la direction d'avancement (A) et à l'autre de ses extrémités sur la poutre (2) au moyen d'un axe (31, 32) qui est également sensiblement horizontal et sensiblement perpendiculaire à la direction d'avancement (A). Les deux axes d'articulation (31 et 32) des deux leviers (27 et 28) sur la poutre (2) sont plus éloignés l'un de l'autre que leurs deux axes d'articulation (29, 30) sur le carter (10). De cette manière ces leviers (27 et 28) se rapprochent l'un de l'autre vers le bas. Des droites (D et D') passant par les deux axes d'articulation (29, 31 et 30, 32) de chaque levier (27, 28) se rencontrent en un point (P) se situant entre les roues porteuses (13 à 16). Sa distance du sol peut être à peu près égale à la moitié de la hauteur desdites roues porteuses (13 à 16). Par ce point (P) passe un axe de pivotement virtuel du rotor (8) par rapport à la poutre (2) de la structure porteuse (1). Cet axe de pivotement virtuel est sensiblement parallèle aux axes d'articulation (29 à 32).

Le support (12) des roues porteuses (13 à 16) possède un bras (33) qui est dirigé dans la direction d'avancement (A) et qui est fixé à l'axe central (11). Ce bras (33) est muni à son extrémité située à l'avant dudit axe central (11) d'une traverse (34). Celle-ci porte deux roues porteuses (13 et 14) dont l'une se situe à gauche et l'autre à droite de l'axe central (11). Chacune de ces roues porteuses (13 et 14) est montée sur une fusée (35) qui est solidaire d'un levier coudé (36). Chaque levier coudé (36) est articulé sur la traverse (34) au moyen d'un axe sensiblement vertical (37) qui se situe plus en avant que la roue porteuse (13, 14) correspondante. La traverse (34) porte sur son côté avant un arceau (38) muni d'une troisième roue porteuse (15). Celle-ci se situe devant l'axe central (11) du rotor (8). Elle est également montée sur une fusée (35) qui est solidaire d'un levier coudé (36), lequel levier est articulé sur l'arceau (38) au moyen d'un axe sensiblement vertical (37) situé plus en avant que la roue (15) elle-même. Le bras (33) porte une quatrième roue porteuse (16) qui se situe derrière l'axe central (11). Comme les autres roues (13, 14 et 15), elle est montée sur une fusée (35) qui est solidaire d'un levier coudé (36). Ce levier coudé (36) est articulé sur le bras (33) au moyen d'un axe sensiblement vertical (37) qui se situe plus en avant que la roue porteuse (16). Les quatre roues porteuses (13 à 16) sont pivotantes autour des axes verticaux (37) de leurs leviers (36) respectifs. Les angles de pivotement peuvent être limités au moyen de butées. De cette manière ces roues (13 à 16) peuvent s'orienter dans les virages. De plus, grâce à leur disposition par rapport à l'axe central (11), elles peuvent être proches des outils d'andainage (9) pour bien leur faire suivre les dénivellations du sol.

Le bras (33) du support (12) comporte un moyen (39) appuyant la quatrième roue porteuse (16) contre le sol durant le travail d'andainage. Ce bras (33) est réalisé en une première partie (40) qui est liée à l'axe central (11) et une seconde partie (41) qui porte ladite roue (16). Cette seconde partie (41) est articulée sur la première partie (40) au moyen d'un axe (42) sensiblement horizontal et sensiblement perpendiculaire au sens d'avancement (A). Un ressort de traction (43) se situe sous le bras (33). Il est accroché à sa première partie (40) et à sa seconde partie (41) de telle sorte qu'il tire cette seconde partie (41) avec la roue porteuse (16) vers le bas et vers l'avant.

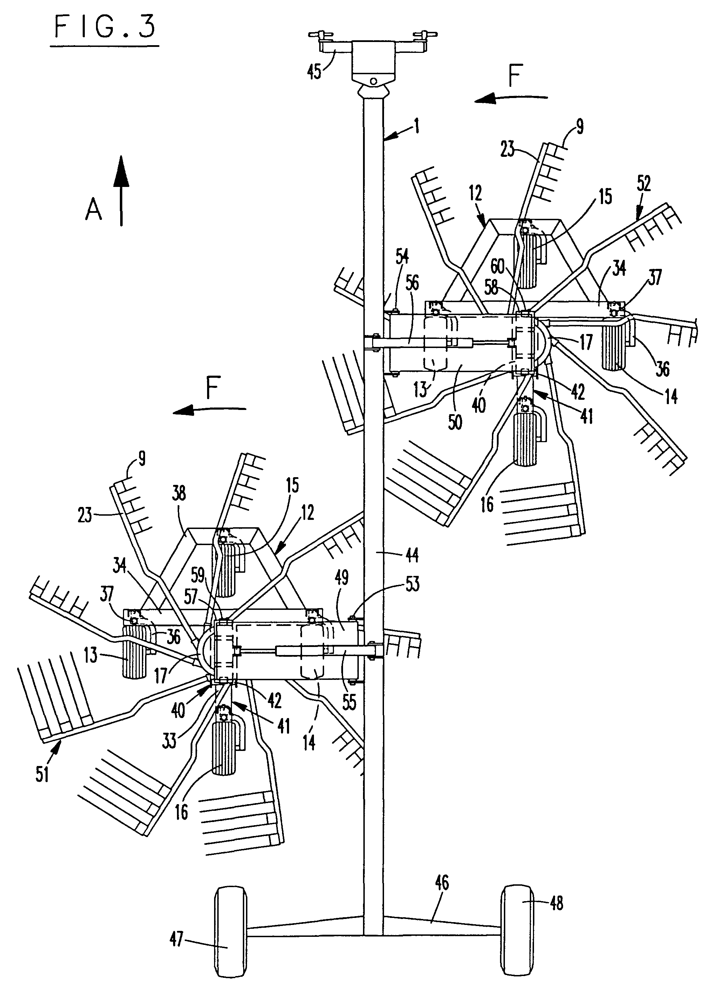

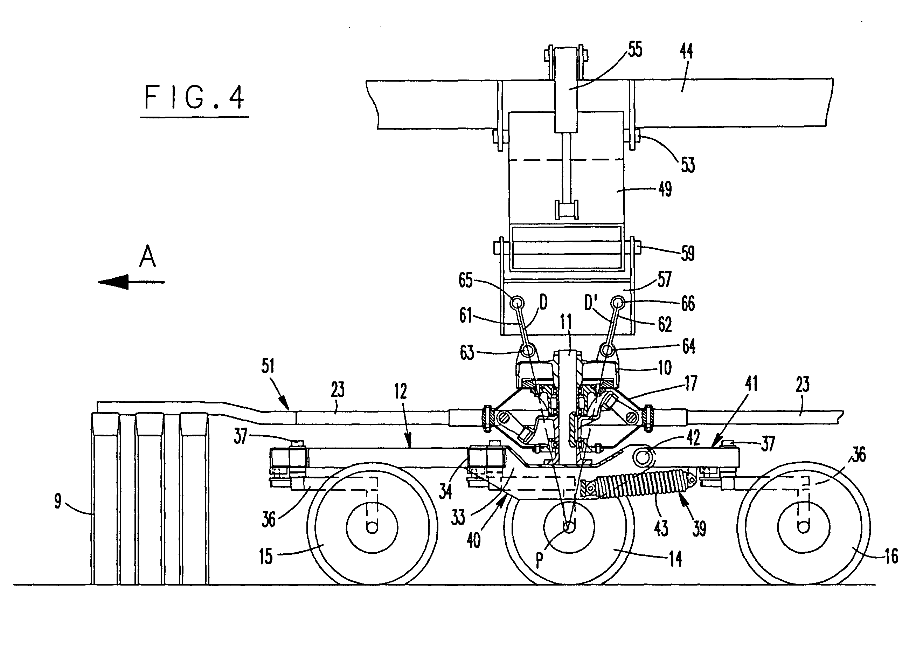

Telle qu'elle est représentée dans l'exemple selon les figures 3 et 4, l'andaineuse comporte une structure porteuse (1). Celle-ci est constituée par une poutre (44) qui possède à son extrémité avant un dispositif d'accouplement deux points (45) pour l'accrocher à un tracteur d'entraînement et à son extrémité arrière une traverse (46) avec deux roues de déplacement (47 et 48) qui reposent sur le sol. Ladite structure (1) possède en sus deux bras (49 et 50) portant chacun un rotor (51, 52). Comme le rotor (8) de l'exemple selon les figures 1 et 2, chaque rotor (51, 52) comporte un carter (10) avec un axe central (11). Sur cet axe (11) est monté un boîtier (17) avec des bras (23) munis d'outils (9) commandés par une came. A son extrémité inférieure est fixé un support (12) avec quatre roues porteuses (13 à 16) pivotantes autour d'axes sensiblement verticaux (37) de leurs supports coudés (36). Celles-ci sont disposées sous le rotor (51, 52) correspondant respectivement à gauche, à droite, devant et derrière son axe central (11). La roue (16) qui est située derrière ledit axe (11) est liée à un bras (33) du support (12) qui comporte un moyen (39) appuyant ladite roue porteuse (16) contre le sol durant le travail. Ce moyen (39) est constitué par un ressort de traction (43) qui est accroché à une première partie fixe (40) et à une seconde partie mobile (41) du bras (33), cette seconde partie (41) étant articulée sur la première partie (40) avec un axe (42) sensiblement horizontal et perpendiculaire à la direction d'avancement (A).

Les bras (49 et 50) qui portent les rotors (51 et 52) s'étendent sensiblement perpendiculairement à la poutre (44) de la structure porteuse (1), l'un sur son côté gauche et l'autre sur son côté droit. Ils sont décalés l'un par rapport à l'autre, considéré dans la direction d'avancement (A). Ils peuvent être télescopiques de sorte que l'écartement entre les rotors (51 et 52) puisse être modifié. Chacun de ces bras (49 et 50) est articulé sur la poutre (44) au moyen d'un axe (53, 54) sensiblement horizontal et dirigé dans la direction d'avancement (A). Entre la poutre (44) et chaque bras (49, 50) est en sus disposé un vérin hydraulique (55, 56). Celui-ci permet de relever et d'abaisser le bras (49, 50) correspondant autour de son axe d'articulation (53, 54). La liaison entre chaque bras (49, 50) et son rotor (51, 52) est effectuée à travers une pièce intermédiaire (57, 58). Cette pièce (57, 58) est articulée à l'extrémité du bras (49, 50) correspondant au moyen d'un axe (59, 60) sensiblement horizontal et dirigé dans la direction d'avancement (A). Cet axe (59, 60) est par conséquent sensiblement parallèle à l'axe d'articulation (53, 54) du bras (49, 50) sur la poutre (44). Ledit axe (59, 60) se situe pratiquement au-dessus de l'axe central (11) du rotor (51, 52) correspondant de manière à ce que celui-ci soit pratiquement en équilibre lorsqu'il est soulevé au moyen de son bras (49, 50). D'autre part, chaque rotor (51, 52) est relié à la pièce intermédiaire (57, 58) correspondante au moyen de deux leviers (61 et 62) sensiblement conformes aux leviers (27 et 28) décrits en liaison avec l'exemple selon les figures 1 et 2. Ces leviers (61 et 62) sont articulés à l'une de leurs extrémités sur le carter (10) du rotor (51, 52) au moyen d'axes (63 et 64) qui sont sensiblement horizontaux et sensiblement perpendiculaires à la direction d'avancement (A). A leur autre extrémité ils sont articulés sur la pièce intermédiaire (57, 58) au moyen d'axes (65 et 66) qui sont également sensiblement horizontaux et sensiblement perpendiculaires à la direction d'avancement (A). Les deux axes d'articulation (65 et 66) des deux leviers (61 et 62) sur la pièce intermédiaire (57, 58) sont plus éloignés l'un de l'autre que leurs deux axes d'articulation (63 et 64) sur le carter (10). De cette manière ces leviers (61 et 62) se rapprochent l'un de l'autre vers le bas. Des droites (D et D') passant par les deux axes d'articulation (63, 65 et 64, 66) de chaque levier (61, 62) se rencontrent en un point (P) se situant entre les roues porteuses (13 à 16). Sa distance du sol peut être à peu près égale à la moitié de la hauteur desdites roues porteuses (13 à 16). Par ce point (P) passe un axe de pivotement virtuel du rotor (51, 52) correspondant par rapport aux bras (49 et 50) de la structure porteuse (1). Cet axe de pivotement virtuel est sensiblement parallèle aux axes d'articulation (63 à 66) des leviers (61 et 62). Il se situe sous l'axe d'articulation (59, 60) de la pièce intermédiaire (57, 58) correspondante avec le bras porteur (49, 50).

Durant le travail d'andainage, la machine selon les figures 1 et 2 est déplacée sur le sol dans la direction d'avancement (A), au moyen d'un tracteur. Le boîtier (17) du rotor (8) est alors entraîné en rotation dans le sens (F) autour de l'axe sensiblement vertical (11) à partir de l'arbre de prise de force du tracteur. La came (24) commande les bras porte-outils (23), par l'intermédiaire des galets (26) et des leviers (25), de telle sorte que dans la partie avant de leur trajectoire, les outils (9) soient sensiblement verticaux et ramassent les produits se trouvant sur le sol. Ensuite, sur la partie latérale de leur trajectoire, les outils (9) se lèvent et déposent les produits ramassés sous la forme d'un andain. Enfin, sur la partie arrière de leur trajectoire, ces outils (9) reviennent progressivement dans la position pour ramasser.

**Durant ce travail, les roues (13 à 16) roulent sur le sol et portent le rotor (8).** Grâce à leur situation sous le rotor (8), elles ne passent pas sur les produits à andainer. Elles s'orientent automatiquement dans les virages autour des axes (37) sensiblement verticaux de leurs leviers coudés (36). Lorsque les roues porteuses (13 à 16) passent sur des dénivellations elles font pivoter le rotor (8) par rapport à la structure porteuse (1). Ces pivotements s'effectuent, par l'intermédiaire des leviers (27 et 28), autour de l'axe virtuel qui se situe à l'intersection (P) des droites (D et D'). Elles font ainsi suivre fidèlement les dénivellations aux outils d'andainage (9). Les deux roues (13 et 14) situées latéralement à l'axe central (11) peuvent en sus faire pivoter le rotor (8) et la poutre (2) autour des axes (6 et 7) des pivots (4 et 5) du dispositif d'accouplement (3).

La roue porteuse arrière (16) qui est tirée vers le bas par le ressort (43) garde constamment le contact avec le sol lors du passage sur les dénivellations. De ce fait elle stabilise le rotor (8). En sus, par l'intermédiaire de la seconde partie (41) du bras (33), elle exerce une poussée sur le rotor (8) qui tend à le faire pivoter vers l'avant autour de l'axe virtuel qui passe par l'intersection (P). Les outils (9) qui se situent dans la partie avant de leur trajectoire, c'est à dire dans la partie dans laquelle ils ramassent les produits, sont alors maintenus près du sol. Cela permet d'obtenir le ramassage de la totalité des produits.

Durant le travail d'andainage, la machine représentée sur les figures 3 et 4 est attelée à un tracteur qui la déplace dans la direction (A). Les deux bras (49 et 50) qui portent les rotors (51 et 52) sont abaissés et leurs roues porteuses (13 à 16) roulent sur le sol. Les boîtiers (17) de ces rotors (51 et 52) sont alors entraînés dans le même sens de rotation (F) à partir d'un arbre de prise de force du tracteur ou au moyen de moteurs hydrauliques. Les bras porte-outils (23) sont commandés de telle sorte que leurs outils (9) ramassent les produits dans la partie avant de leur trajectoire et les déposent dans la partie latérale de leur trajectoire. Les outils (9) du rotor (51) le plus en arrière reprennent les produits déposés par le rotor (52) qui est le plus en avant et forment un andain latéral de gros volume.

Les roues (13 à 16) sous chaque rotor (51 et 52) s'orientent automatiquement autour des axes (37) sensiblement verticaux de leurs leviers coudés (36) dans les virages. Elles ne roulent pas non plus sur les produits à andainer. Lorsqu'elles passent sur des dénivellations elles font pivoter le rotor (51, 52) correspondant par rapport à la structure porteuse (1). Ces pivotements s'effectuent, par l'intermédiaire des leviers (61 et 62), autour de l'axe virtuel qui se situe à l'intersection (P) des droites (D et D') et autour de l'axe (59, 60) de la pièce intermédiaire (57, 58). Elle font ainsi suivre toutes les dénivellations aux outils d'andainage (9).

La roue porteuse arrière (16) de chaque rotor (51, 52) est tirée vers le bas par le ressort (43) correspondant. Elle garde constamment le contact avec le sol lors du passage sur les dénivellations et stabilise le rotor (51, 52) correspondant. En sus, elle exerce une poussée sur ledit rotor (51, 52) correspondant qui tend à le faire pivoter vers l'avant autour de l'axe virtuel qui se situe à l'intersection (P) des droites (D et D'). Les outils d'andainage (9) qui se situent dans la partie avant de leur trajectoire sont alors maintenus près du sol. Cela permet d'améliorer le ramassage des produits couchés sur le sol.

Il est bien évident que l'invention n'est pas limitée aux modes de réalisation décrits ci-dessus et représentés sur les dessins annexés. Des modifications restent possibles, notamment en ce qui concerne la constitution ou le nombre des divers éléments ou par substitution d'équivalents techniques, sans pour autant sortir du domaine de protection tel que défini dans les revendications.

## Revendications

1. Machine de fenaison comportant notamment une structure porteuse (1) qui peut être reliée à un tracteur, au moins un rotor (8, 51, 52) avec des outils d'andainage (9) commandés au travail, lequel rotor (8, 51, 52) est articulé sur la structure porteuse (1) de manière à pouvoir pivoter autour d'au moins un axe (29, 30, 31, 32, 63, 64, 65, 66) sensiblement horizontal et perpendiculaire au sens d'avancement, ce rotor (8, 51, 52) pouvant être entraîné en rotation autour d'un axe central (11) qui est sensiblement vertical et qui est muni à son extrémité inférieure d'un support (12) équipé de plusieurs roues porteuses (13 à 16) disposées près des outils d'andainage (9) et dont au moins une se situe, vu dans le sens d'avancement (A), derrière l'axe central (11), ***caractérisée par le fait que*** la roue porteuse (16) qui se situe derrière l'axe central (11) est liée à un bras (33) du support (12) qui comporte un moyen (39) appuyant ladite roue porteuse (16) contre le sol durant le travail d'andainage de telle sorte qu'elle soit constamment en appui sur le sol et qu'elle ait tendance à faire pivoter le rotor (8, 51, 52) vers le bas sur sa moitié avant, autour de l'articulation avec la structure porteuse (1).

2. Machine selon la revendication 1, ***caractérisée par le fait que*** le bras (33) de la roue porteuse (16) qui se situe derrière l'axe central (11) est réalisé en une première partie (40) qui est fixe et une seconde partie (41) qui porte ladite roue (16) et qui est articulée sur la première partie (40) au moyen d'un axe (42) sensiblement horizontal et sensiblement perpendiculaire au sens d'avancement (A).

3. Machine selon la revendication 2, ***caractérisée par le fait qu***'elle comporte un ressort de traction (39) qui est accroché à la première partie (40) et à la seconde partie (41) du bras (33) de telle sorte qu'il tire cette seconde partie (41) avec la roue porteuse (16) vers le bas et vers l'avant.

4. Machine selon la revendication 1, ***caractérisée par le fait que*** le support (12) comporte en sus une roue porteuse (15) qui se situe à l'avant de l'axe central (11), une roue porteuse (14) qui se situe à sa droite et une roue porteuse (13) qui se situe à sa gauche, vu dans le sens d'avancement (A).

5. Machine selon l'une quelconque des revendications précédentes, ***caractérisée par le fait qu'*** à l'extrémité supérieure du rotor (8, 51, 52) sont articulés deux leviers (27 et 28 ou 61 et 62) au moyen d'axes (29 et 30 ou 63 et 64) sensiblement horizontaux et perpendiculaires au sens d'avancement (A), lesdits leviers (27 et 28 ou 61 et 62) étant par ailleurs articulés sur la structure porteuse (1) au moyen d'axes (31 et 32 ou 65 et 66) qui sont également sensiblement horizontaux et perpendiculaires au sens d'avancement (A).

6. Machine selon la revendication 5, ***caractérisée par le fait que*** les axes d'articulation (29 à 32 ou 63 à 66) des deux leviers (27 et 28 ou 61 et 62) sont placés de telle sorte que ces leviers se rapprochent l'un de l'autre vers le bas, des droites (D et D') passant par leurs axes d'articulation (29, 31 et 30, 32 ou 63, 65 et 64, 66) respectifs se rencontrant en un point (P) se situant entre les roues porteuses (13 à 16).

7. Machine selon la revendication 6, ***caractérisée par le fait que*** le point d'intersection (P) se situe à une distance du sol qui est à peu près égale à la moitié de la hauteur des roues porteuses (13 à 16).

8. Machine selon l'une quelconque des revendications précédentes, ***caractérisée par le fait que*** la structure porteuse (1) comporte un axe de pivotement (59, 60) qui est sensiblement horizontal et dirigé dans la direction d'avancement (A), pour chaque rotor (51, 52).

9. Machine selon la revendication 8, ***caractérisée par le fait que*** chaque rotor (51, 52) est porté par un bras (49, 50) de la structure porteuse (1), chaque bras (49, 50) comportant un axe de pivotement (59, 60) pour une pièce intermédiaire (57, 58) à laquelle est relié un rotor (51, 52) par l'intermédiaire des leviers (61 et 62).

## Claims

1. Haymaking machine comprising, in particular, a carrying structure (1) which may be connected to a tractor, at least one rotor (8, 51, 52) with windrowing tools (9) operated during work, which rotor (8, 51, 52) is articulated to the carrying structure (1) in such a way as to be able to pivot about at least one axis (29, 30, 31, 32, 63, 64, 65, 66) which is substantially horizontal and perpendicular to the direction of forward travel, this rotor being able (8, 51, 52) to be driven in rotation about a central axis (11) which is substantially vertical and which at its lower end is equipped with a support (12) equipped with several carrier-wheels (13 to 16) arranged near to the windrowing tools (9) and of which at least one is located, when viewed in the direction of forward travel (A), behind the central axis (11), ***characterized in*** that the carrier-wheel (16) located behind the central axis (11) is connected to an arm (33) of the support (12) which comprises a means (39) pressing the said carrier-wheel (16) against the ground during windrowing work so that it constantly bears on the ground and tends to cause the rotor (8, 51, 52) to pivot downwards on its front half, about the articulation to the carrying structure (1).

2. Machine according to Claim 1, ***characterized in*** that the arm (33) of the carrier-wheel (16) located behind the central axis (11) is made of a first part (40) which is stationary and of a second part (41) which carries the said wheel (16) and which is articulated to the first part (40) by means of an axis (42) which is substantially horizontal and substantially perpendicular to the direction of forward travel (A).

3. Machine according to Claim 2, ***characterized in*** that it comprises a tension spring (39) which is attached to the first part (40) and to the second part (41) of the arm (33) in such a way that it pulls this second part (41) with the carrier-wheel (16) downwards and forwards.

4. Machine according to Claim 1, ***characterized in*** that the support (12) additionally comprises a carrier-wheel (15) located forward of the central axis (11), a carrier-wheel (14) located to its right and a carrier-wheel (13) located to its left, when viewed in the direction of forward travel (A).

5. Machine according to any one of the preceding claims, ***characterized in*** that two levers (27 and 28 or 61 and 62) are articulated to the upper end of the rotor (8, 51, 52) by means of axes (29 and 30 or 63 and 64) which are substantially horizontal and perpendicular to the direction of forward travel (A), the said levers (27 and 28 or 61 and 62) also being articulated to the carrying structure (1) by means of axes (31 and 32 or 65 and 66) which are also substantially horizontal and perpendicular to the direction of forward travel (A).

6. Machine according to Claim 5, ***characterized in*** that the axes of articulation (29 to 32 or 63 to 66) of the two levers (27 and 28 or 61 and 62) are arranged in such a way that these levers converge towards one another downwards, straight lines (D and D') passing through their respective articulation axes (29, 31 and 30, 32 or 63, 65 and 64, 66) meeting at a point (P) located between the carrier-wheels (13 to 16).

7. Machine according to Claim 6, ***characterized in*** that the point of intersection (P) is at a distance from the ground which is almost equal to half the height of the carrier-wheels (13 to 16).

8. Machine according to any one of the preceding claims, ***characterized in*** that the carrying structure (1) comprises a pivot axis (59, 60) which is substantially horizontal and directed in the direction of forward travel (A) for each rotor (51, 52).

9. Machine according to Claim 8, ***characterized in*** that each rotor (51, 52) is carried by an arm (49, 50) of the carrying structure (1), each arm (49, 50) having a pivot axis (59, 60) for an intermediate part (57, 58) to which a rotor (51, 52) is connected via the levers (61 and 62).

## Patentansprüche

1. Heuwerbungsmaschine, die insbesondere ein mit einem Schlepper verbindbares Traggestell (1) und mindestens einen Rotor (8, 51, 52) mit im Betrieb gesteuerten Schwadwerkzeugen (9) enthält, wobei der Rotor (8, 51, 52) so an dem Traggestell (1) angelenkt ist, daß er um mindestens eine im wesentlichen horizontale und senkrecht zur Fahrtrichtung verlaufende Achse (29, 30, 31, 32, 63, 64, 65, 66) schwenken kann, wobei dieser Rotor (8, 51, 52) um eine im wesentlichen vertikale zentrale Achse (11) drehangetrieben werden kann, die an ihrem unteren Ende mit einem Träger (12) versehen ist, an dem mehrere nahe den Schwadwerkzeugen (9) angeordnete Stützräder (13 bis 16) vorgesehen sind, von denen sich mindestens eines, in Fahrtrichtung (A) gesehen, hinter der zentralen Achse (11) befindet, ***dadurch gekennzeichnet,*** daß das Stützrad (16), das sich hinter der zentralen Achse (11) befindet, mit einem Arm (33) des Trägers (12) verbunden ist, der ein Mittel (39) aufweist, das das Stützrad (16) während der Schwadarbeit so an den Boden drückt, daß es fortwährend am Boden anliegt und daß es dazu neigt, den Rotor (8, 51, 52) an seiner vorderen Hälfte um das Gelenk mit dem Traggestell (1) nach unten zu schwenken.

2. Maschine nach Anspruch 1, ***dadurch gekennzeichnet,*** daß der Arm (33) des sich hinter der zentralen Achse (11) befindenden Stützrads (16) aus einem festgelegten ersten Teil (40) und einem das Rad (16) tragenden zweiten Teil (41), der mittels einer im wesentlichen horizontalen und im wesentlichen senkrecht zur Fahrtrichtung (A) verlaufenden Achse (42) an dem ersten Teil (40) angelenkt ist, hergestellt ist.

3. Maschine nach Anspruch 2, ***dadurch gekennzeichnet,*** daß sie eine Zugfeder (39) aufweist, die so an dem ersten Teil (40) und dem zweiten Teil (41) des Arms (33) angelenkt ist, daß sie diesen zweiten Teil (41) mit dem Stützrad (16) nach unten und nach vorne zieht.

4. Maschine nach Anspruch 1, ***dadurch gekennzeichnet,*** daß der Träger (12) des weiteren, in Fahrtrichtung (A) gesehen, ein sich vor der zentralen Achse (11) befindendes Stützrad (15), ein sich rechts davon befindendes Stützrad (14) und ein sich links davon befindendes Stützrad (13) aufweist.

5. Maschine nach irgend einem der vorhergehenden Ansprüche, ***dadurch gekennzeichnet,*** daß am oberen Ende des Rotors (8, 51, 52) mittels im wesentlichen horizontaler und senkrecht zur Fahrtrichtung (A) verlaufender Achsen (29 und 30 oder 63 und 64) zwei Hebel (27 und 28 oder 61 und 62) angelenkt sind, wobei die Hebel (27 und 28 oder 61 und 62) des weiteren mittels ebenfalls im wesentlichen horizontaler und in Fahrtrichtung (A) senkrecht verlaufender Achsen (31 und 32 oder 65 und 66) an dem Traggestell (1) angelenkt sind.

6. Maschine nach Anspruch 5, ***dadurch gekennzeichnet*,** daß die Gelenkachsen (29 bis 32 oder 63 bis 66) der beiden Hebel (27 und 28 oder 61 und 62) so angeordnet sind, daß sich diese Hebel nach unten hin einander annähern, wobei sich durch ihre jeweilige Gelenkachsen (29, 31 und 30, 32 oder 63, 65 und 64, 66) verlaufende Geraden (D und D') in einem sich zwischen den Stützrädern (13 bis 16) befindenden Punkt (P) treffen.

7. Maschine nach Anspruch 6, ***dadurch gekennzeichnet,*** daß sich der Schnittpunkt (P) in einem Abstand vom Boden befindet, der in etwa gleich der Hälfte der Höhe der Stützräder (13 bis 16) ist.

8. Maschine nach irgend einem der vorhergehenden Ansprüche, ***dadurch gekennzeichnet,*** daß das Traggestell (1) für jeden Rotor (51, 52) eine Schwenkachse (59, 60) aufweist, die im wesentlichen horizontal verläuft und in Fahrtrichtung (A) ausgerichtet ist.

9. Maschine nach Anspruch 8, ***dadurch gekennzeichnet,*** daß jeder Rotor (51, 52) von einem Arm (49, 50) des Traggestells (1) getragen wird, wobei jeder Arm (49, 50) eine Schwenkachse (59, 60) für ein Zwischenstück (57, 58) enthält, mit dem mittels der Hebel (61 und 62) ein Rotor (51, 52) verbunden ist.
